# EUROPEAN PATENT APPLICATION

(11) **EP 1 793 172 A1**
(43) Date of publication of application: **06.06.2007**
(21) Application number: 05767452.5
(22) Date of filing: 28.07.2005
(51) Int. Cl.: F24C 1/00, F24C 7/02, F24C 15/32

(54) **STEAM COCKER**

(30) Priority: 03.08.2004 JP 2004226544
(71) Applicant: SHARP KABUSHIKI KAISHA, Osaka-shi, Osaka 545-8522 (JP)
(72) Inventor: ANDO, Yuji, 6391055 (JP); KITAGUCHI, Yoshikazu, 5830842 (JP); YAMAMOTO, Yoshikazu, 5710063 (JP)
(74) Representative: Brown, Kenneth Richard
(86) International application number: PCT/JP2005/013818
(87) International publication number: WO 2006/013771

(57) **Abstract**

A controller monitors water temperature in a pot (41) through a water temperature thermistor in a temperature sensor (48) while a water level sensor is detecting the water level in the pot. When the water temperature in the pot exceeds 110°C, the controller determines that the water level thermistor in the water level sensor (43) cannot perform normal detection, and drives the pump (35) to supply water. When water supply based on the temperature detected by the water temperature thermistor is carried out more than three times, the controller determines that scale has deposited on the water level sensor (43), and notifies a user of a scale cleaning request. In this manner, in the case of detection failure of the water level thermistor, it is possible to notify a scale cleaning request at an appropriate time by determining whether or not the detection failure is attributable to scale deposits.

## Description

### TECHNICAL FIELD

The present invention relates to a steam cooker.

### BACKGROUND ART

Heretofore, as a superheated steam cooker for cooking an object to be cooked such as food by using superheated steam, there is a one that feeds steam into a cooking section (for example, see JP 2001-263666 A). In this superheated steam cooker, steam generated in a steam generating section outside of the cooking section is sent into the cooking section and heated by an inside heating section in the cooking section to generate superheated steam. Further, the steam generating section is provided with an openable and closable lid so that disposal of scale remaining inside due to evaporation of water can easily be performed.

However, in the conventional superheated steam cooker shown in JP2001-263666 A, it is not possible for a user to learn that scale has been accumulated in the inside of the steam generating section. Therefore, the user has to sometimes open the lid of the steam generating section and determine an extent of accumulation of scale by directly checking with eyes, which is troublesome.

### SUMMARY OF THE INVENTION

An object of this invention is to provide a steam cooker which can supply water to a steam generator even if it becomes impossible for a water level sensor in the steam generator to normally detect a water level because of deposition of scale on the sensor, and which can detect the scale deposition on the water level sensor and notify a user of it.

In order to accomplish the object, a steam cooker according to the present invention comprises:
a steam generator for heating and evaporating water to generate steam;
a heating chamber in which an object to be cooked is heated by steam supplied from the steam generator, the steam generator, including:
   a pot to which water is supplied;
   a heater section placed in the pot;
   a water level sensor placed in vicinity of an upper side of the heater section and comprising a self-heating type temperature sensing device for outputting a temperature signal that represents a detected temperature; and
   a water temperature sensor placed in vicinity of the upper side of the heater section and outputting a temperature signal that represents a detected temperature;
a pump for supplying water to the pot; and
a water supply control section for controlling the pump to perform water supply to the pot when a water temperature based on the temperature signal from the water temperature sensor exceeds a second predetermined temperature higher than a first predetermined temperature that is a water temperature when a water level in the pot is normally detected according to changes in water temperature based on the detected temperature of the self heating type temperature sensing device.

With the above construction, the water supply control section performs water supply to the pot when the water temperature based on the temperature signal from the water temperature sensor exceeds the second predetermined temperature higher than the first predetermined temperature (which is a water temperature detectable when the water level sensor is normally operating). Therefore, even if it becomes impossible for the self-heating type temperature sensing device of the water level sensor to normally detect a temperature, water supply to the pot can be performed. Accordingly, even if it becomes impossible for the water level sensor to normally detect a water level because of the scale deposition and the like, cooking can be continued.

In one embodiment, the water supply control section controls the pump to stop water supply to the pot when the water temperature based on the temperature signal from the water temperature sensor reaches a third predetermined temperature lower than the second predetermined temperature or reaches the second predetermined temperature.

Since a temperature sensing device used for the water temperature sensor has poor responsivity, if water supply is stopped after the water temperature sensor has detected the water temperature corresponding to an upper limit of the normal water level, there may be excess water supply. According to this embodiment, water supply is stopped when the water temperature measured by the water temperature sensor reaches the third predetermined temperature that is lower than the second predetermined temperature, or reaches the second predetermined temperature. Therefore, excess water supply is prevented and it is possible to perform water supply in an optimum amount.

In one embodiment, the water supply control section controls the pump to stop water supply to the pot when a lapse time from start of the water supply reaches a predetermined time that is longer than a water supply time in performing water supply based on a water level detected by the water level sensor.

Since the second predetermined temperature at which water supply by the water supply control section is started is higher than the first predetermined temperature that is a water temperature to be detected while the water level sensor is normally operating, the water level at the start of the water supply is lower than that at the start of water supply based on the water level detected by the water level sensor. According to this embodiment, water supply is performed for a longer time than a time of water supply carried out based on the water level detected by the water level sensor. Therefore, even if water supply is started at a lower water level than the water level at the start of normal water supply, water supply in an optimum amount can be performed.

In one embodiment, the steam cooker includes a heater turn-off section for stopping power, supply to the heater section when the water temperature based on the temperature signal from the water temperature sensor exceeds a fourth predetermined temperature higher than the second predetermined temperature.

According to this embodiment, even if water supply based on the water level detected by the water level sensor or water supply based on the temperature detected by the water temperature sensor is being performed, when the water temperature of the pot exceeds the fourth predetermined temperature higher than the second predetermined temperature, which is a water supply start temperature based on the temperature detected by the water temperature sensor, power supply to the heater section is stopped. Therefore, even if a water supply section including the pump gets out of order, boil-dry protection for the pot is achieved.

In one embodiment, the steam cooker includes a water supply counting section for counting a number of times of water supply to the pot by the water supply control section, and a scale deposition determining section for determining that scale has deposited on the water level sensor when a counted value of the number of times of the water supply satisfies a predetermined condition.

According to this embodiment, water supply based on the water temperature detected by the water temperature sensor is performed when the self heating type temperature sensor of the water level sensor fails to normally detect the temperature. Therefore, it is possible to know a long lasting detection failure state of the self-heating temperature sensing device, by counting the number of times of the water supply performed based on the detected water temperature of the water temperature sensor, to thereby determine that scale has deposited on the water level sensor.

In one embodiment, the scale deposition determining section uses, as said predetermined condition, a condition that water supply to the pot by the water supply control section is successively performed a first predetermined number of times or more.

According to this embodiment, when water supply based on the water temperature detected by the water temperature sensor is successively performed, it is determined that scale has deposited on the water level sensor.

In one embodiment, the scale deposition determining section uses, as the aforementioned predetermined condition, a condition that water supply to the pot by the water supply control section is performed a second predetermined number of times or more within a predetermined time.

According to this embodiment, water supply based on the temperature detected by the water temperature sensor is performed a plurality of times within the predetermined time, it is determined that scale has deposited on the water level sensor.

In one embodiment, the steam cooker includes a cleaning request signal output section for outputting a cleaning request signal for requesting cleaning of the inside of the pot and the water level sensor when the scale deposition determining section has determined that scale has deposited on the water level sensor.

In this embodiment, it is possible to output a message requesting scale cleaning based on the cleaning request signal for requesting cleaning.

In one embodiment, the steam cooker includes a cleaning request notifying section for, after completion of heating of the object to be cooked, notifying a user of a cleaning request based on the cleaning request signal outputted from the cleaning request outputting section.

According to this embodiment, since the user is notified of the cleaning request after completion of current cooking, the user is prevented from stopping the cooking to perform cleaning with citric acid. The cooking or heating operation is continued in this manner. Thus, a failure in cooking is prevented. Even in such a case, water supply based on the water temperature detected by the water temperature sensor can be performed, so that an abnormal state such as boil-dry of the pot and the like is avoided.

In one embodiment, the steam cooker includes a cancellation request rejecting section for, when there is a cancellation request from a user in response to the notification of the cleaning request by the cleaning request notifying section, determining whether or not a predetermined condition for rejecting the cancellation request is satisfied, and rejecting the cancellation request when the predetermined condition is satisfied.

According to this embodiment, a user's cancellation request to the notification of the cleaning request can be accepted, so that it becomes possible to perform heating without interruption. Therefore, it is possible to prevent the convenience of the user from being impaired. Further, on that occasion, that is, when there is a cancellation request, if the predetermined condition is satisfied, the cancellation request is rejected. Therefore, it is possible to prevent scale on the water level sensor and in the pot from being left as it is, which would lead to impairment of safety of equipment.

In one embodiment, the cancellation request rejecting section uses, as said predetermined condition, a condition that water supply to the pot by the water supply control section is successively performed a third predetermined number of times or more, the third predetermined number of time being larger than the first predetermined number of times used for determining the deposition of scale.

According to this embodiment, when the water supply based on the water temperature detected by the water temperature sensor is successively performed more times than the first prescribed number of times for determining the scale deposition, the cancellation request is rejected to make the user perform cleaning of the water level sensor and the pot.

In one embodiment, the cancellation request rejecting section uses, as said predetermined condition, a condition that water supply to the pot by the water supply control section is performed a fourth predetermined number of times, said fourth predetermined number of time being larger than the second predetermined number of times used for determining the deposition of scale.

According to this embodiment, if the water supply based on the water temperature detected by the water temperature sensor is performed more times than the second prescribed number of times for determining the deposition of scale within the predetermined time, the cancellation request is rejected to make the user perform cleaning of the water level sensor and the pot.

In one embodiment, the steam cooker includes a cancellation counting section for counting a number of times of cancellation of the cleaning request, wherein the cancellation request rejecting section uses, as the aforementioned predetermined condition, a condition that a counted value of the number of times of cancellation represents a fifth predetermined number of times or more.

According to this embodiment, when the number of times of cancellation of the cleaning request has already reached the fifth predetermined times or more, the cancellation request is rejected to make the user perform cleaning of the water level sensor and the pot.

In one embodiment, the cancellation counting section decrements or resets the counted value when no water supply to the pot by the water supply control section has been performed in a cooking carried out after cancellation of the cleaning request.

If water supply to the pot by the water supply control section is not performed during cooking performed after cancellation of a cleaning request, the cancelled cleaning request was based on a sporadic or temporary detection failure of the water level sensor. Thus, it is not required to clean the water level sensor or the pot. According to this embodiment, since the counted value of the number of times of cancellation is decremented in that case, the user can cancel the cleaning request a regular or proper number of times.

In one embodiment, the steam cooker includes a cleaning request cancellation count storing section for storing a counted value of the cancellation counting section in a non-volatile storing device.

According to this embodiment, since the counted value of the cancellation counting section is stored in the non-volatile storing device, even if the power source is turned off in order to reduce the standby energy, the counted value is retained. Therefore, when the power source is turned on next time, the counted value of the cancellation counting section is restored.

As is apparent from the above description, in the steam cooker of this invention, water supply to the pot is performed by the water supply control section when the water temperature based on the temperature signal from the water temperature sensor exceeds the second predetermined temperature higher than the first predetermined temperature (which is a temperature which should be detected by the water level sensor during its normal operation). Therefore, even if it becomes impossible for the self-heating type temperature sensing device of the water level sensor to correctly detect a temperature, water supply to the pot can be performed. Accordingly, even in the case in which it becomes impossible for the water level sensor to precisely detect the water level because of scale on the sensor and the like, cooking can be continued.

Further, if the number of times of water supply to the pot by the water supply control section is counted, it is possible to determine, based on the counted value of the number of times of the water supply, whether or not scale has deposited on the water level sensor. Accordingly, it is possible to discriminate an abnormal state of the water level sensor due to scale deposits on the sensor from an abnormal state due to a sporadic or temporary factor, and notify the user of the deposition of scale at an optimum time.

### BRIEF DESCRIPTION OF THE DRAWINGS

Fig. 1 is a perspective view showing an external appearance of a steam cooker according to the invention;
Fig. 2 is a perspective view showing an external appearance of the steam cooker shown in Fig. 1 with its door opened;
Fig. 3 is a schematic diagram showing the construction of the steam cooker shown in Fig. 1;
Fig. 4A is a plan view of a pot of Fig. 3;
Fig. 4B is a sectional view taken along line IV-IV in Fig. 4A;
Fig. 5A is a side view of the whole steam generator in Fig. 3;
Fig. 5B is a cross sectional view taken along line V-V in Fig. 5A;
Fig. 6 is a view showing the internal construction of a water level sensor in Fig. 3;
Fig. 7 is a view showing a water level control range in the pot;
Fig. 8 is a chart showing changes in water level and water temperature in the pot and an ON/OFF state of a pump;
Fig. 9 is a graph showing a relationship between a boiling water level and a temperature detected by a water temperature thermistor;
Fig. 10 is a view showing specific positions at water levels shown in Fig. 9;
Fig. 11 is a control block diagram of the steam cooker shown in Fig. 1;
Fig. 12 is a flowchart of an operation of water supply to the pot and scale cleaning determination, executed by the control device shown in Fig. 11; and
Fig. 13 is a flowchart of the operation of water supply to the pot and scale cleaning determination following Fig. 12.

### DETAILED DESCRIPTIONF OF THE INVENTION

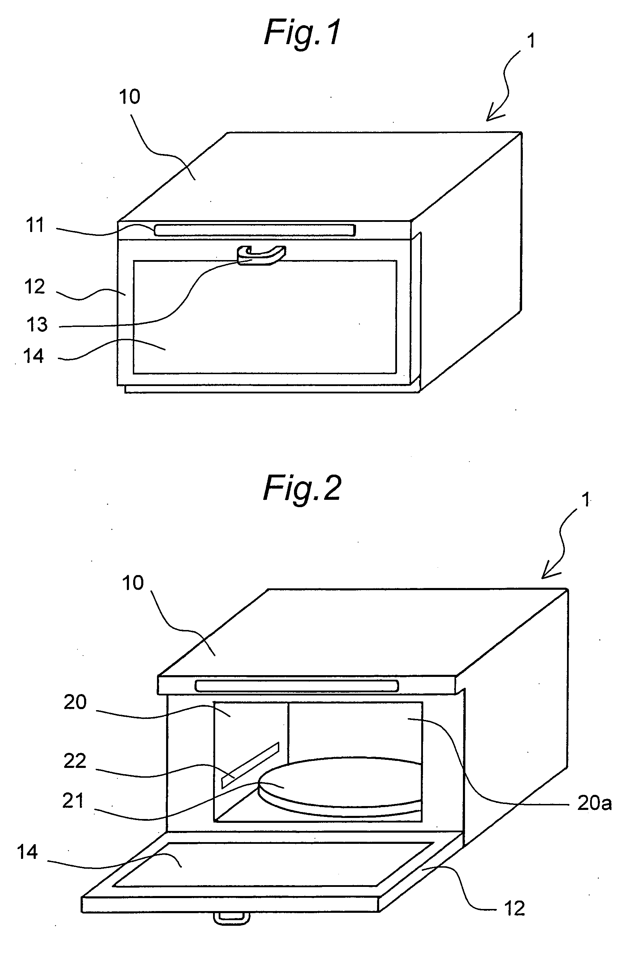

The steam cooker of the invention will be described using examples shown in the drawings. Fig. 1 is an external perspective view of a steam cooker 1 according to the present embodiment of the invention. The steam cooker 1 is schematically constructed as follows. A front upper portion of a rectangular parallelepiped cabinet 10 is provided with an operation panel 11, and a door 12, which is rotatable around a lower end side of the cabinet, is provided under the operation panel 11. An upper portion of the door 12 is provided with a handle 13, and the door 12 is provided with a window 14 made of thermal glass.

Fig. 2 is an external perspective view of the steam cooker 1 with the door 12 opened. A rectangular parallelepiped heating chamber 20 is provided in the cabinet 10. The heating chamber 20 has an opening 20a on its front side facing the door 12, and side surfaces, a bottom surface and a top surface of the heating chamber 20 are formed of stainless steel plates. A side of the door 12 facing the heating chamber 20 is formed of a stainless steel plate. A heat insulator (not shown) is placed in the surrounding of the heating chamber 20 and the interior of the door 12 to insulate the inside of the heating chamber 20 from the outside.

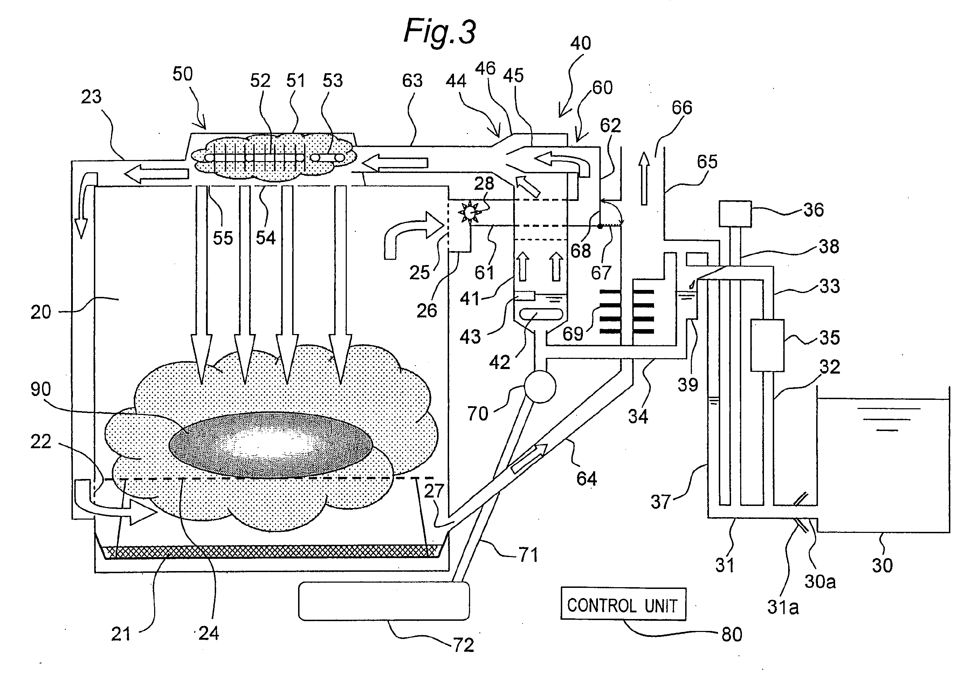

A stainless steel-made catch pan 21 is placed at the bottom surface of the heating chamber 20, and a stainless steel wire-made rack 24 (shown in Fig. 3) for receiving an object to be cooked is placed on the catch pan 21. Further, side steam outlets 22 of a roughly rectangular shape, which are extending roughly horizontally (only one of the outlets is seen in Fig. 2), are provided at both lower lateral sides of the heating chamber 20.

Fig. 3 is a schematic view showing the basic construction of the steam cooker 1. As shown in Fig. 3, the steam cooker 1 includes the heating chamber 20, a water tank 30 for storing water for steam, a steam generator 40 for evaporating water supplied from the water tank 30, a steam temperature-raising device 50 for heating steam from the steam generator 40, and a control unit 80 for controlling operation of the steam generator 40, the steam temperature-raising device 50 and other devices.

The lattice-like rack 24 is placed on the catch pan 21 placed in the heating chamber 20, and an object 90 to be cooked is placed at a roughly central portion of the rack 24.

A connecting portion 30a provided at the lower side of the water tank 30 is connectable to a funnel-like receiving port 31a provided at one end of a first water supply pipe 31. The suction side of a pump 35 is connected to an end of a second water supply pipe 32, which branches off from the first water supply pipe 31 and extends upward, and one end of a third water supply pipe 33 is connected to the discharge side of the pump 35. A water level sensor 36 for the water tank is provided at an upper end portion of a pipe 38 for the water level sensor, which pipe branches off from the first water supply pipe 31 and extends upward. Further, an upper end portion of an air releasing pipe 37 that branches off from the first water supply pipe 31 and extends upward is connected to an exhaust gas duct 65.

The third water supply pipe 33 has an L shape that is bent roughly horizontally from a vertically placed portion and an auxiliary tank 39 is connected to the other end of the third water supply pipe 33. One end of a fourth water supply pipe 34 is connected to a lower end of the auxiliary tank 39, and the other end of the fourth water supply pipe 34 is connected to a lower end of the steam generator 40. One end of a drain valve 70 is connected to the lower side from the fourth water supply pipe 34 in the steam generator 40. One end of a drain pipe 71 is connected to the other end of the drain valve 70, and a water drain tank 72 is connected to the other end of the drain pipe 71. An upper portion of the auxiliary tank 39 communicates with air via the air releasing pipe 37 and the exhaust gas duct 65.

Once the water tank 30 has been connected to the receiving port 31a of the first water supply pipe 31, water rises in the air releasing pipe 37 until its water level reaches the same water level as that of the water tank 30. Since a tip of the pipe 38 connected to the water level sensor 36 for the water tank is sealed, the water level in the pipe 38 does not rise, but a pressure in a sealed space in the pipe 38 for the water level sensor increases from an atmospheric pressure, depending on the water level of the water tank 30. This pressure change is detected by a pressure detection device (not shown) in the water level sensor 36 for the water tank, whereby the water level in the water tank 30 is detected. Although water level measurement does not require the air releasing pipe 37 while the pump 35 is stationary, the air releasing pipe 37 having an open end is used in order to prevent deterioration of accuracy in the detection of the water level due to direct application of a suction pressure of the pump 35 to the pressure detection device.

The steam generator 40 has a pot 41, to the lower side of which the other end of the fourth water supply pipe 34 is connected, a heater section 42 placed in the vicinity of a bottom surface in the pot 41, a water level sensor 43 placed in the vicinity of the upper side of the heater section 42 in the pot 41, and a steam suction ejector 44 attached to the upper side of the pot 41. A fan casing 26 is placed outside an intake opening 25 provided at an upper portion of a lateral side of the heating chamber 20. Steam in the heating chamber 20 is sucked through the intake opening 25 by a blower fan 28 placed in the fan casing 26. The sucked steam is sent to an inlet side of the steam suction ejector 44 via a first pipe 61 and a second pipe 62. The first pipe 61 is placed roughly horizontally, and its one end is connected to the fan casing 26. The second pipe 62 is roughly vertically placed, and its one end is connected to the other end of the first pipe 61, and the other end of the second pipe 62 is connected to the inlet side of an inner nozzle 45 of the steam suction ejector 44.

The steam suction ejector 44 has an outer nozzle 46 that covers an outer side of the inner nozzle 45, and the discharge side of the inner nozzle 45 communicates with an internal space of the pot 41. The discharge side of the outer nozzle 46 of the steam suction ejector 44 is connected to one end of a third pipe 63 and a steam temperature-raising device 50 is connected to the other end of the third pipe 63.

The fan casing 26, the first pipe 61, the second pipe 62, the steam suction ejector 44, the third pipe 63, and the steam temperature-raising device 50 form an external circulation passage 60. One end of a discharge passage 64 is connected to a discharge port 27 provided in a lower portion of the lateral side of the heating chamber 20, and the other end of the discharge passage 64 is connected to one end of the exhaust gas duct 65. The other end of the exhaust gas duct 65 is provided with an exhaust gas outlet 66. A radiator 69 is outwardly fitted to the exhaust gas duct 65 side of the discharge passage 64. A connection portion between the first pipe 61 and the second pipe 62 is connected to the exhaust gas duct 65 through an exhaust gas passage 67. At the connection side with the first and second pipes 61, 62, the exhaust gas passage 67 is provided with a damper 68 that opens/closes the exhaust gas passage 67.

The steam temperature-raising device 50 includes a tray-shaped case 51 placed, with its opening downward, on a ceiling side at a central portion of the heating chamber 20, a first steam superheater 52 placed in the tray-shaped case 51, and a second steam superheater 53 placed in the tray-shaped case 51. A bottom of the tray-shaped case 51 is formed of a metallic ceiling panel 54 serving as a ceiling plane of the heating chamber 20. The ceiling panel 54 is formed with a plurality of ceiling steam outlets 55. Both upper and lower surfaces of the ceiling panel 54 give a dark color by coating and the like. The ceiling panel 54 may also be formed of a metal material that turns into a dark color by repetitive use or a dark-color ceramic molded product.

One end of each of steam supply passages 23 (in Fig. 3, only one of them is shown), which extend to the left and right sides of the heating chamber 20, is individually connected to the steam temperature-raising device 50. The other end of each of the steam supply passages 23 extends downward along the respective side surfaces of the heating chamber 20 and is connected to respective side steam outlets 22, which are provided in a lower position of the lateral sides of the heating chamber 20.

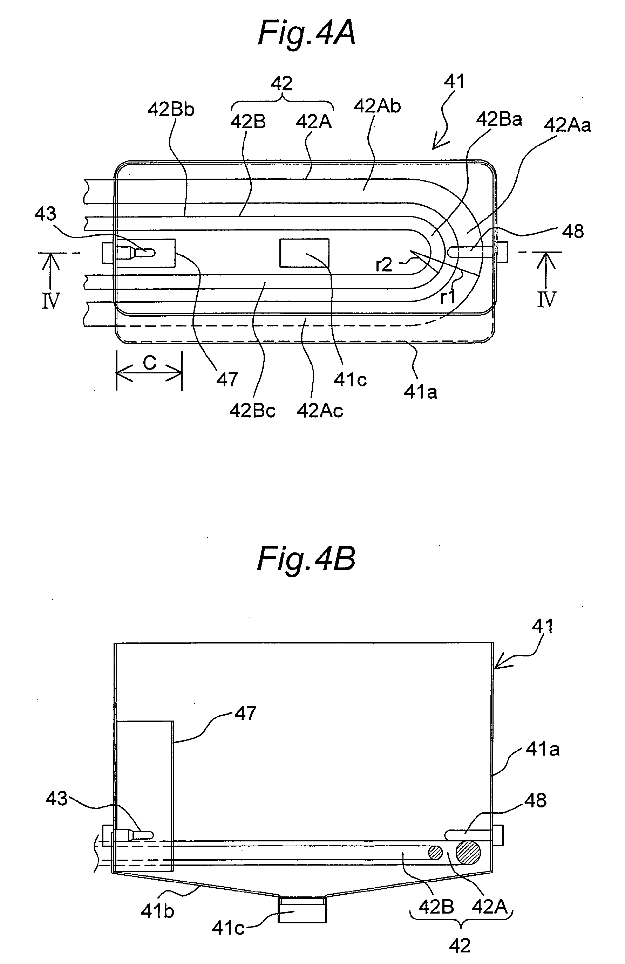

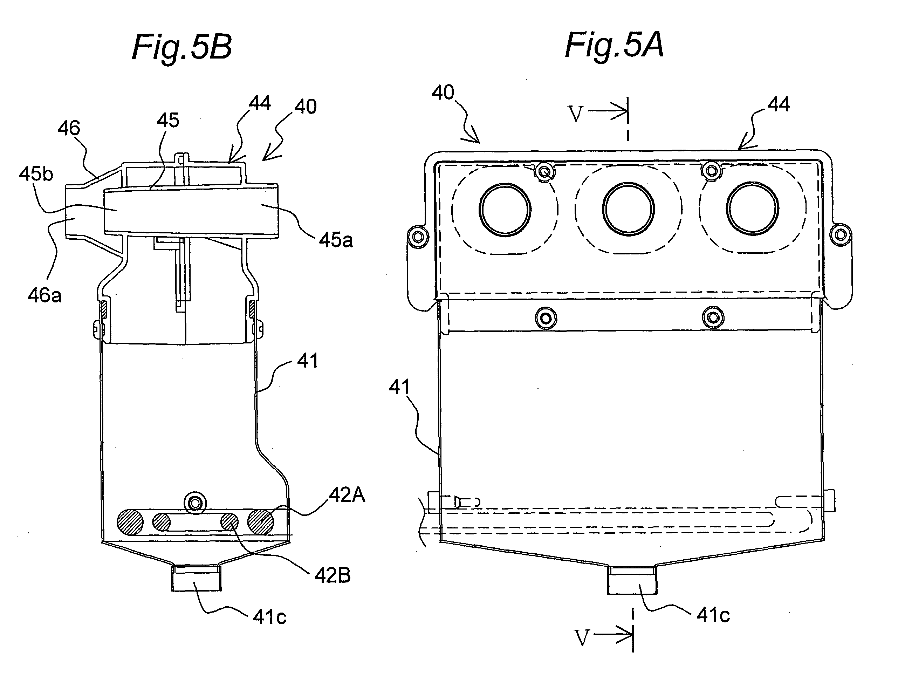

Figs. 4A, 4B, 5A and 5B are views showing the construction of the steam generator 40. The steam generator 40 will be described below in detail with reference to Figs. 4A, 4B, 5A and 5B.

Fig. 4A and Fig. 4B are construction views of the pot 41 of the steam generator 40, Fig. 4A is a plan view seen from above, and Fig. 4B is a cross sectional view taken along line IV-IV in Fig. 4A.

As shown in Figs. 4A and 4B, the pot 41 includes a cylinder portion 41a which has, in its horizontal plan view, a roughly rectangular shape, a bottom portion 41b provided on the lower side of the cylinder portion 41a and having an inclined plane that is gradually lowered toward a center portion of the bottom portion, and a water supply port 41c provided at a roughly center portion of the bottom portion 41b. Although the vertical to horizontal ratio of the planar shape of the pot 41 is 1:2.5, what is required of the planar shape is that the planar shape is an elongated shape, namely a rectangular or elliptic shape. Preferably, however, the vertical to horizontal ratio in the case of the rectangular shape is 1:2, more preferably 1:2.5, and most preferably 1:3 or less.

The heater section 42 is placed in the vicinity of the bottom portion 41b in the pot 41. The heater section 42 is constructed of a first steam generation heater 42A that is a U-shaped sheath heater having a larger pipe diameter and a second steam generation heater 42B that is a U-shaped sheath heater having a smaller pipe diameter, which is placed inside the first steam generation heater 42A and roughly on the same plane as the first steam generation heater 42A. The heater section 42 is placed adjacent to sidewalls of the cylinder portion 41a of the pot 41. A minimum distance between an outer edge of the heater section 42 and the sidewalls of the cylinder portion 41a is set to 2 mm to 5 mm. A lowermost portion of the heater section 42 is placed adjacent to the bottom portion 41b of the pot 41. A minimum distance between a lowermost portion of the heater section 42 and the bottom portion 41b of the pot 41 is set to 2 mm to 5 mm.

In this embodiment, a 700W sheath heater having a larger pipe size is used as the first steam generation heater 42A, while a 300W sheath heater having a smaller pipe size is used as the second steam generation heater 42B. The first steam generation heater 42A is constructed of a curved portion 42Aa that has a roughly semicircular arc shape, and two linear portions 42Ab, 42Ac that extend roughly parallel from both ends of the curved portion 42Aa. Likewise, the second steam generation heater 42B is constructed of a curved portion 42Ba that has a generally semicircular arc shape, and two linear portions 42Bb, 42Bc that extend roughly parallel from both ends of the curved portion 42Ba. A minimum curvature radius r1 of the curved portion 42Aa of the first steam generation heater 42A depends on a sheath heater having a larger pipe size to be used, while a minimum curvature radius r2 (<r1) of the curved portion 42Ba of the second steam generation heater 42B depends on a sheath heater having a smaller pipe size to be used.

A water level sensor 43 is placed in the vicinity of the upper side of the heater 42 in the pot 41 and at a sidewall on the side of a non-heating portion (region C of Fig. 4A) inside the second steam generation heater 42B. In the pot 41, a partition plate 47 having a square cornered U-shape in cross section, which surrounds the water level sensor 43, is provided. The partition wall 47 and the sidewall in the pot 41 form a casing having a rectangular shape in cross section. A lower end of the partition plate 47 is located on the upper side of the bottom portion 41b of the pot 41 and beneath the lowermost portions of the first and second steam generation heaters 42A, 42B. On the other hand, an upper end of the partition plate 47 is set at a level that is twice or more of a height from the lowermost portion of the heater 42 to an attaching position of the water level sensor 43. Further, a temperature sensor 48 is placed at a sidewall opposite to the water level sensor 43 in the pot 41.

The water level sensor 43 is a self-heating thermistor. In water, a temperature ranging from about 100°C to 140°C is detected depending on a water temperature ranging from about 20°C to 100°C. On the other hand, in air, a temperature ranging from about 140°C to 150°C is detected. Based on the water temperature detected by the temperature sensor 48, the temperature detected by the water level sensor 43 is determined, whereby the presence or absence of water, namely whether or not water is present at the attaching position of the water level sensor 43 is determined.

Figs. 5A and 5B are construction views of the whole steam generator 40 including the pot 41, in which Fig. 5A is a side view, and Fig. 5B is a cross sectional view taken along line V-V of Fig. 5A.

As shown in Figs. 5A and 5B, the steam suction ejector 44 is attached to the pot 41 in a manner so as to cover an upper side opening of the pot 41, which is internally provided with the first and second steam generation heaters 42A, 42B. A fluid (steam) flowing in from an inlet 45a of the inner nozzle 45 of the steam suction ejector 44 is discharged from an outlet 45b of the inner nozzle 45 and then discharged from the opening 46a of the outer nozzle 46. At this time, since the discharge side of the inner nozzle 45 communicates with an internal space of the pot 41, saturated steam generated in the pot 41, which is led to the opening 46a side of the outer nozzle 46, is discharged from the opening 46a of the outer nozzle 46 together with steam discharged from the outlet 45b of the inner nozzle 45. That is, saturated steam with a temperature of 100°C and a pressure of 1 atm. (i.e., 1013.25 hPa), which is generated by boiling water in the pot 41, is sucked into a circulating airflow that passes the external circulation passage 60 (shown in Fig. 3). By the structure of the steam suction ejector 44, saturated steam is immediately sucked up. Since no pressure is applied in the steam generator 40, discharge of saturated steam is not hindered.

The present invention relates to measures against scale deposits on the water level sensor 43. The measures against scale deposits will be described below in detail while describing the internal construction, principle of operation, and method of control of the water level sensor 43.

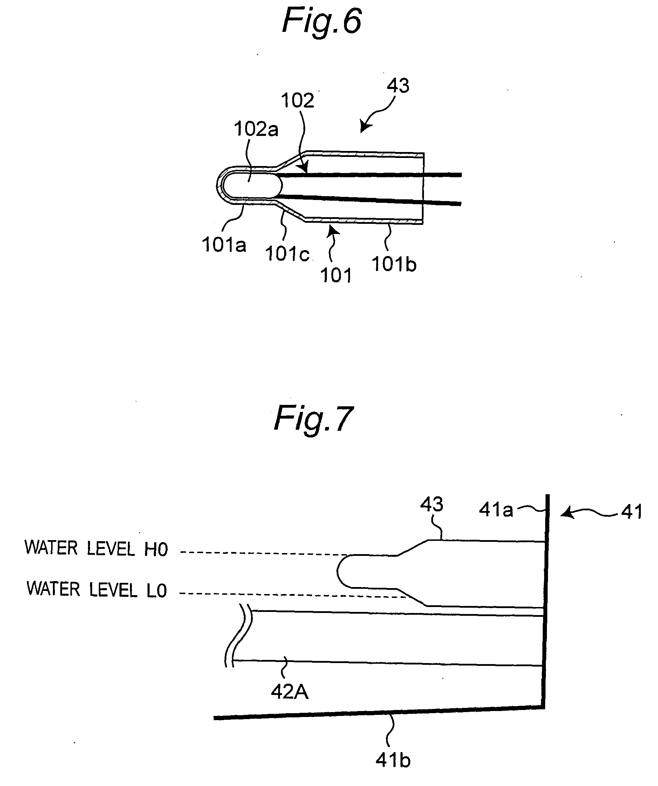

Fig. 6 shows the internal construction of the water level sensor 43. The water level sensor 43 is constructed of a casing 101 having a small diameter cylindrical pipe 101a with its one end closed, a large diameter cylindrical pipe 101b and a connection pipe 101c that smoothly connects the cylindrical pipe 101a to the cylindrical pipe 101b, and a self-heating thermistor 102 with a detection device 102a inserted in the small diameter cylindrical pipe 101a of the casing 101. An electric current is passed through the detection device 102a so that the detection device is heated to about 120°C in air. If the small diameter cylindrical pipe 101a is soaked in water in this state, a detected temperature is lowered to about 100° C or less. The water level in the pot 41 is detected based on a temperature difference then. That is, in the present embodiment, the self-heating thermistor 102 is used as a self-heating type temperature sensing device.

Changes in the detected temperature of the self-heating thermistor 102 in the water level sensor 43 are affected by the following factors.
(A) The casing 101 into which the self-heating thermistor is inserted is typically composed of a metal (SUS etc.) superior in heat transferability and corrosion resistance. Since the casing 101 is heated by self-heating of the self-heating thermistor 102, a change of the detected temperature of the self heating thermistor 102 depending on the presence or absence of water tends to be delayed.
(B) Even if the water level is lowered than a tip portion of the water level sensor 43, the tip portion connects with a water surface by surface tension of water for a while.
(C) Even if the water level is not at the tip portion of the water level sensor 43, some amount of water coating is present over the tip portion. Thus, it requires some time for the water coating to be evaporated by heat quantity of the self-heating thermistor 102.

Because of the reasons (A), (B), and (C) mentioned above, even if one intends to control the water level at one level, in reality, the water level will be controlled between a water level H0 and a water level L0. The water level H0 roughly corresponds to an uppermost surface of the small diameter cylindrical pipe 101a of the casing 101, while the water level L0 corresponds to a roughly middle portion of the connection pipe 101c of the casing 101. Meanwhile, a distance between the water level H0 and the water level L0 varies depending on factors such as the water supply rate, the exothermic temperature of the self-heating thermistor 102, the material and thickness of the casing 101, or the like.

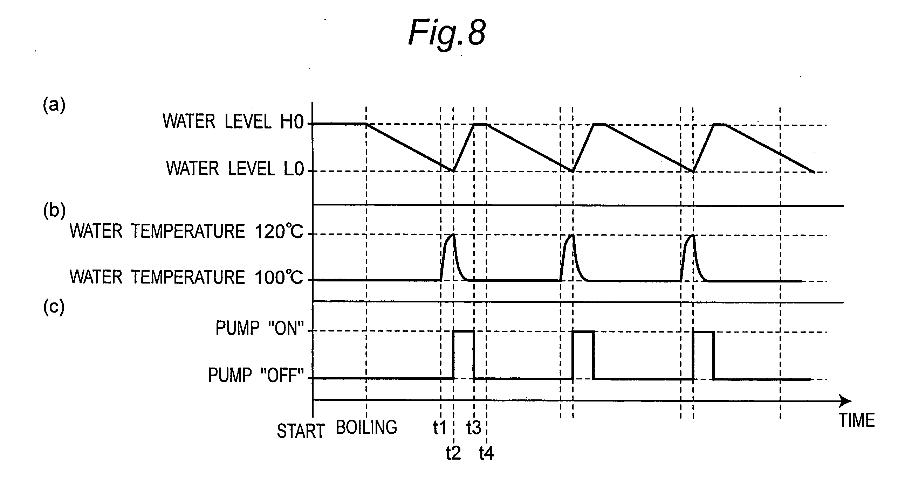

Fig. 8 shows changes in water level (Fig. 8 (a)), changes in water temperature (Fig. 8(b)), and an ON/OFF state of the pump 35. A water level control operation for the pot 41 will be described below with reference to Figs. 6 to 8.
(1) Water has been supplied into the pot 41 up to the water level H0 by an initial water supply operation.
(2) Once heating by the heater section 42 is started, the water starts boiling before long, and the water level is lowered accompanied by evaporation. In this state, since the water level sensor 43 is soaked in water, the self-heating thermistor 102 stands at a detected temperature of about 100°C. (start → boiling → time t1)
(3) When the water level is further lowered, the detected temperature of the self-heating thermistor 102 is gradually increased while being governed by the factors (A), (B), and/or (C). (time t1 → time t2)
(4) When the water level in the pot 41 reaches the water level L0, the detected temperature of the self-heating thermistor 102 reaches 120°C. Then, the pump 35 that is a water supply section is driven so that water is supplied into the pot 41. The water level in the pot 41 rises accordingly and, when the water level sensor 43 is soaked in water, the detected temperature of the self-heating thermistor 102 lowers to 100°C. Then, the driving of the pump 35 is stopped, and the water level in the pot 41 reaches H0. (time t2 → time t3)
(5) Because the water supplied into the pot has a low temperature, the water temperature in the pot 41 is lowered, so that boiling is stopped temporarily. Time passes without any changes in water level until the water boils again. (time t3 → time t4)
(6) Thereafter, when the water starts boiling, the above operation is repeated going back to the time of "boiling". In this manner, the water level in the pot 41 is controlled between the water level H0 and the water level L0.

If the boiling, evaporation and supply of water are repeated in the pot 41 as described above, white powdery scales formed by precipitation of calcium or magnesium in the water are attached to the pot 41 before long, and scales are also attached to the tip portion of the water level sensor 43. In the case where scales are attached to the tip portion of the water level sensor 43 in this manner, it becomes impossible for the water level sensor 43 to perform normal water level detection.

Causes that would make it impossible for the water level sensor 43 to perform normal water level detection as described above include the following:
(a) Scales are attached to the tip portion of the water level sensor 43. In this case, cleaning is required in order to remove the scales. In addition, since scales are also accumulated in the pot 41 as well, it is also required to clean the inside of the pot 41.
(b) Droplets generated during boiling are scattered and attached to the water level sensor 43. In this case, the temperature of the water level sensor 43 is lowered because the water attached to the water level sensor 43 provides vaporization heat removal when it is evaporated, so that the water level sensor 43 makes an erroneous determination that the water level is high in spite that the water level is actually lowered to expose the water level sensor 43. That is, in this case, scales are not attached to the inside of the pot 41 or the tip portion of the water level sensor 43 and thus cleaning for removing the scales is not required.
(c) Scales are temporarily attached to the water level sensor 43. In this case, the water level sensor 43 temporarily erroneously detects the water level in the pot 41, but since the scales are peeled off by bubbling and the like during boiling, cleaning for removing the scales is not required.

Cleaning is required in the case of (a), while cleaning is not required in the cases of (b) and (c). Therefore, it is necessary to discriminate the cause (a) from the causes (b) and (c) so as to appropriately determine the timing of a cleaning request for removal of scales.

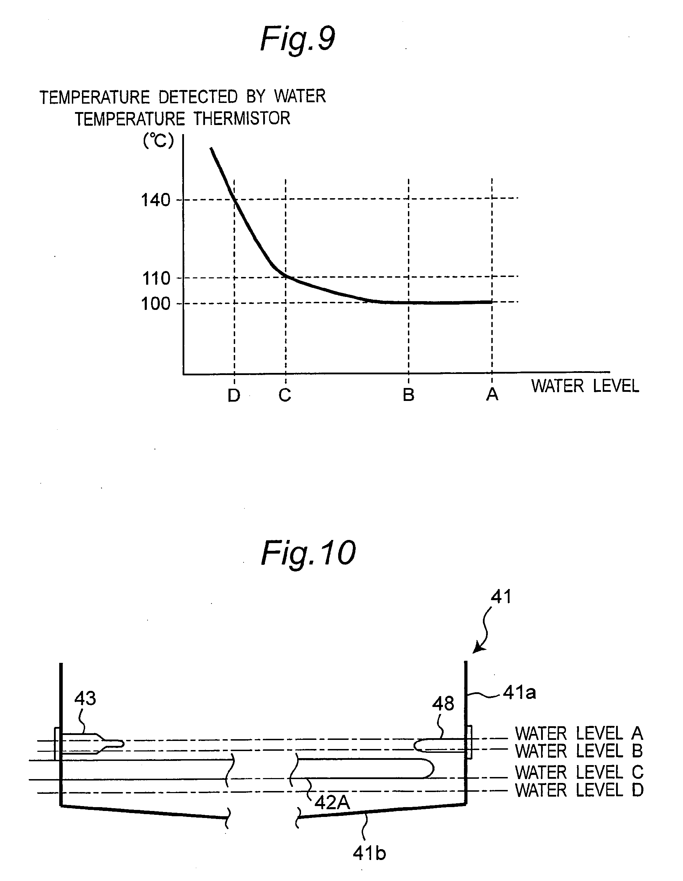

Fig. 9 shows a relationship between the boiling water level in the pot 41 and the temperature detected by a thermistor (not shown) (hereinafter referred to as a water temperature thermistor) of the temperature sensor 48. Specific positions of water levels A to D in Fig. 9 are as shown in Fig. 10.

In Figs. 9 and 10, in the case where the water level in the pot 41 is normally controlled to fall between the water level A and the water level B by a self-heating thermistor 102 of the water level sensor 43 (referred to as the "water level thermistor 102" below), the detected temperature of the water temperature thermistor, governed by the boiling water temperature or the steam temperature, comes to about 100°C. However, if it becomes impossible for the water level thermistor 102 to perform normal detection for the cause (a), (b) or (c), the water level would be lowered than the water level B by boiling. When the water level in the pot 41 is lowered than an upper surface of the first steam generation heater 42A, the surface of the first steam generation heater 42A is exposed so that the water level thermistor 102 will receive radiant heat of the heater in addition to the steam temperature. As a result, the detected temperature of the water temperature thermistor gradually increases. In this state, because water is intermittently poured over the surface of the first steam generation heater 42A because of bubbling during the water boiling, a rise of the surface temperature of the first steam generation heater 42A is gentle, and a temperature rise of the water temperature thermistor is also gentle. (Water level B - water level C)

When the water level is further lowered, the first and second steam generation heaters 42A, 42B are in a completely exposed state and the surface temperatures of the first and second steam generation heaters 42A, 42B increase rapidly. As a result, the temperature of the water temperature thermistor increases rapidly. (Water level C - water level D)

When the first and second steam generation heaters 42A, 42B are put in a completely exposed state because of detection trouble of the water level thermistor 102, water supply failure of a water supply device including the pump 35, or any other reason, boil-dry of the pot 41 is detected based on the detected temperature (140°C) of the water temperature thermistor 102 at the water level D, so that the first and second steam generation heaters 42A, 42B are turned off to secure safety of equipment.

In the present embodiment, in addition to the control over water supply to the pot 41 based on the detected temperature of the water level thermistor 102, the control over water supply is also performed based on the detected temperature of the water temperature thermistor (the temperature at the water level C: about 100°C). Then, based on the number of times of the water supply control based on the detected temperature of the water temperature thermistor, causes for detection failure of the water level thermistor 102 are discriminated between the cause (a) that requires scale cleaning and the causes (b) and (c) that do not require scale cleaning, whereby the timing of a cleaning request for removing scales is appropriately determined.

However, while the water supply control based on the detected temperature of the water level thermistor 102 is always performed in a state in which the first and second steam generation heaters 42A, 42B are soaked in water, the water supply control based on the detected temperature of the water temperature thermistor is performed in a state in which the first and second steam generation heaters 42A, 42B are exposed. Therefore, the water supply control based on the temperature detected by the water temperature thermistor is merely a temporal control considering possible damages to the pot 41 and the first and second steam generation heaters 42A, 42B.

In the case where it is impossible to detect the water level by the water level thermistor 102, the time to start water supply based on the detected temperature of the water temperature sensor is when the detected temperature detected by the water temperature sensor reaches 110°C (the temperature at the water level C) as described above. As for the timing of stopping the water supply, if the water level thermistor 102 has recovered during the water supply (i.e., the detected temperature of the water level thermistor 102 reaches 120°C and it becomes possible to determine that water is at the water level B or lower), the time when the detected temperature of the water level thermistor 102 reaches 100°C indicating that water reaches the water level A is adopted.

If, even during water supply, the detected temperature of the water level thermistor 102 is always 100°C indicating that the water level is above the water level B, a state in which it is impossible for the water level thermistor 102 to detect the water level continues. Therefore, in such a case, the timing of stopping water supply is determined based on the detected temperature of the water temperature thermistor. That is, if the temperature sensor 48 is soaked in water and the detected temperature of the water temperature thermistor is lowered to 100°C, it is determined that the water level has been increased to the water level B or above and the water supply is stopped.

Experimentally, response of the detected temperature of a detection atmosphere by the water temperature thermistor to actual temperature changes of the atmosphere is delayed. For this reason, even if water supply is started, the detected temperature of the water temperature thermistor continues to rise for a while, and then it is gradually lowered. Then, even if the water level has reached the water level A, the water temperature thermistor shows a detected temperature of 100°C or higher due to delay of the response. Therefore, it is preferred that the timing of stopping water supply based on the detected temperature of the water temperature thermistor be set to a time when a temperature same as or lower than the temperature (110°C) for starting water supply is reached. Further, the cause of sporadic detection failure may be solved by soaking the water level thermistor 102 in water sufficiently (for example, scale that is attached temporarily is removed in water). Thus, the water level at the time of the stop of water supply may be set above the upper limit (the water level A) of the normal or regular water level by setting the temperature for stopping water supply to 100°C or lower. These temperatures to be set are determined based on the output of the first and second steam generation heaters 42A, 42B, the water supply rate of the pump 35, the detection responsiveness of the water temperature thermistor, the volume of the pot 41 and the like.

The timing of stopping water supply based on the detected temperature of the water temperature thermistor during water supply can also be set by the operation time of the pump 35. In this case, since the timing of starting water supply is when the water level is lowered than the original water level B, it is required to set a longer time than a pump operation time used when water is supplied from the normal water supply start level B. Furthermore, in coping with the cause of sporadic detection failure as mentioned above, it is also required to set a longer time than the above set time in order to perform water supply to a level above the upper limit (the water level A) of the normal water level, thereby increasing the water supply amount.

The following will describe a method of discriminating between a detection failure of the water level thermistor 102 that requires scale cleaning and a sporadic detection failure that does not require scale cleaning.

In cases in which scale cleaning is required, since scales are attached to the vicinity of the water level thermistor 102 of the water level sensor 43, the lower limit of the water level when evaporating is lowered than the water level B. As a result, the water supply frequency based on the detected temperature of the water temperature thermistor is high. Compared with this, in cases in which the detection failure is attributable to a sporadic cause, the water supply frequency based on the detected temperature of the water temperature thermistor itself is naturally low. Therefore, the discrimination is performed based on the difference in water supply frequency based on the detected temperature of the water temperature thermistor.

For example, in the case where the water supply control is performed twice or more successively based on the detected temperature of the water temperature thermistor, it may be determined that scale cleaning is required. Alternatively, in the case where the water supply control is performed three times or more during a 10-minute heating time based on the detected temperature of the water temperature thermistor, it may be determined that scale cleaning is required. Further alternatively, it may be determined that scale cleaning is required if the water supply control is performed even once during a one-minute heating time based on the detected temperature of the water temperature thermistor. A starting point of measuring the heating time in such cases may be set to a time to start an initial water supply control based on the detected temperature of the water temperature thermistor or a time to start the heating.

There are various additional possible conditions for the discrimination, but the point is that the discrimination is performed by the frequency of the water supply control based on the detected temperature of the water temperature thermistor.

Incidentally, if heating is immediately stopped when a condition requiring scale cleaning is satisfied, it will interrupt cooking that is in progress, leading to failure in cooking food that is precious. Thus, in the present embodiment, it is notified that scale cleaning is required after completion of heating to prevent a loss of food. The timing of the notification may be immediately after completion of heating, after a lapse of a predetermined time from the completion of heating, or when heating is going to be started again.

There may be a user who would like to cook afresh without interruption even if a scale cleaning request is notified. Thus, it is important for an actual cooker to allow the user to select whether scale cleaning is performed or cooking is performed. However, if continuation of re-heating is allowed unconditionally, scales are continuously deposited in the pot 41 of the steam generator 40, so that the safety of the equipment may be impaired. Thus, it is necessary to avoid such a situation.

To judge whether or not deposition of scales is continued to lead to impairment of safety of the equipment, there is a method in which it is discriminated whether the number of times (frequency) of the scale cleaning request is more than the above-described number of times of the water supply control based on the detected temperature of the water temperature thermistor. If the number of times (frequency) of the scale cleaning request is more than the -described number of times of the water supply control, it is determined that the equipment is in a situation in which its safety may be impaired, and the next heat treatment will be rejected. For example, the number of times of the scale cleaning request for rejecting the heat treatment is set to a number obtained by adding "2" to the number of times of the water supply based on the detected temperature of the water-temperature thermistor. Alternatively, the determination may be performed based on the number of times (e.g., 5 times) of cancellation of the cleaning request by the user.

In the latter case where the determination is based on the number of times of cancellation of the cleaning request, it is necessary to consider the following matter. That is, for example, if the number of times of the water supply control based on the detected temperature of the water temperature thermistor in one cooking meets the cleaning request criteria but no cleaning request occurs in a subsequent cooking, there is a high possibility that sporadic or temporary scale formation occurred. In such a case, however, the counted number of times of cancellation might include a number of times of cancellation of the cleaning request due to sporadic occurrence of scale, which should not have been counted. This means that the number of times of cancellation that the user is allowed to make is virtually reduced by that number, thus reducing the convenience of the user. Accordingly, if the heating is completed with the normal water supply, it may be determined that a cleaning request or request that occurred during the heating this time was sporadic and a counted value for the number of times of cancellation of the cleaning request may be decremented (provided that the counted value is larger than 0). Alternatively, it is also effective to reset the counted value of the cancellation of the cleaning request.

If the counted value of the number of times of cancellation of the cleaning request is stored in a non-volatile memory device, it is also possible to cope with the case where the power source is turned off in order to reduce the standby energy.

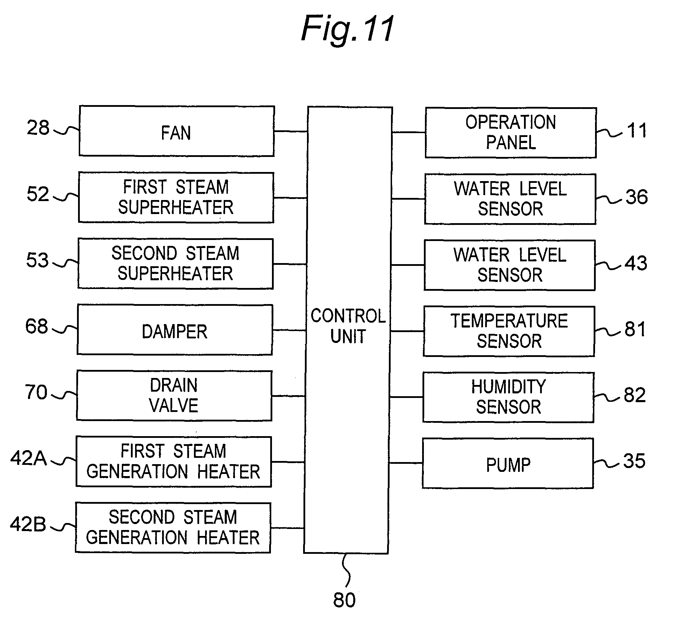

Fig. 11 shows a control block diagram of the present steam cooker 1. The control unit 80 has a microcomputer and input/output circuits, and controls, according to a given program, the blower fan 28, the first steam superheater 52, the second steam superheater 53, the damper 68, the drain valve 70, the first steam generation heater 42A, the second steam generation heater 42B, the operation panel 11 and the pump 35 based on detection signals from the water level sensor 36 for the water tank, the water level sensor 43, a temperature sensor 81, and a humidity sensor 82.

The control unit 80, which has a counting function and a timing function, performs determination of various operation times and the numbers of times of the various operations and also determines attachment of scales to the tip portion of the water level sensor 43.

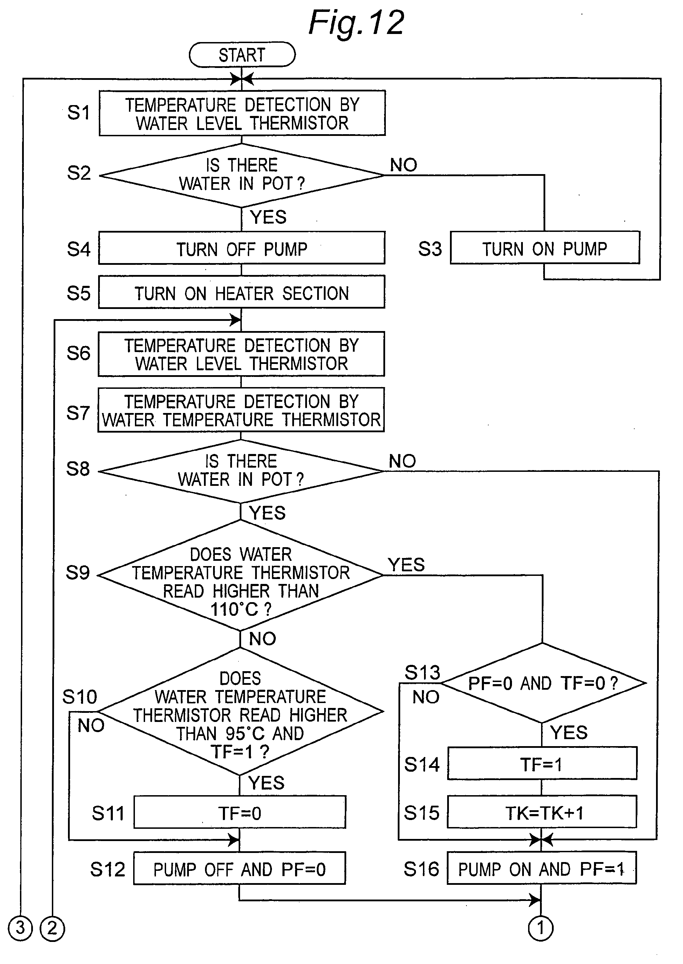

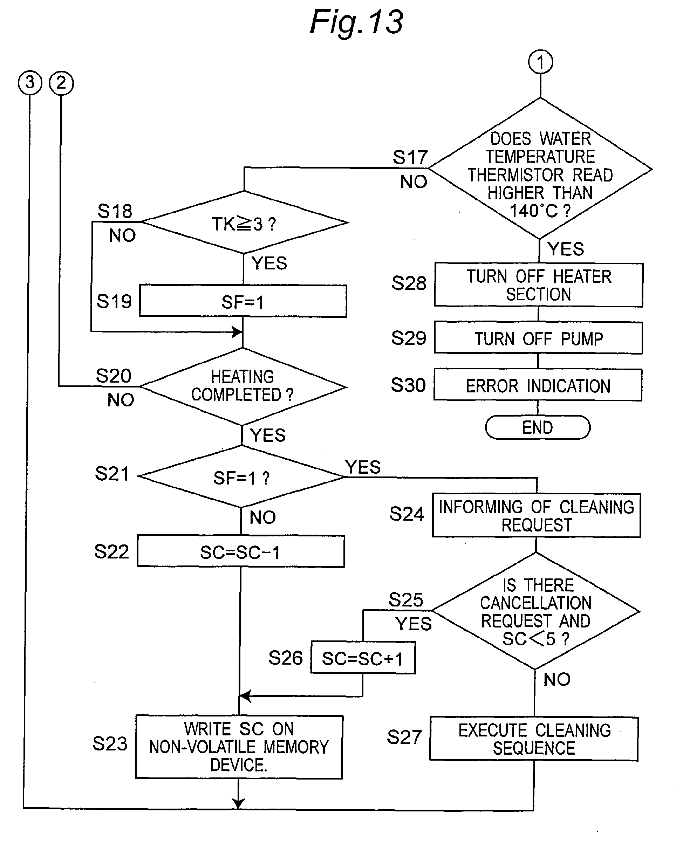

Figs. 12 and 13 show a flow chart of a processing of water supply to the pot and scale cleaning determination. The processing will be described below in detail with reference to Figs. 12 and 13. When the power is turned on, the processing is started.

In step S1, in order to check a state of the inside of the pot 41, the water level thermistor 102 of the water level sensor 43 is turned on and the detected temperature is read out. In step S2, by determining the detected temperature of the water level thermistor 102 of 100°C or less, or of about 120°C, whether or not water is present in the pot 41 is determined. As a result, if water is present, the processing goes on to step S4, and if not, the processing goes on to step S3. In the step S3, the pump 35 is operated so that water is supplied from the water tank 30 to the auxiliary tank 39. Thereafter, the processing returns to the step S1.

In the step S4, the pump 35 is stopped and the water supply to the auxiliary tank 39 is thereby stopped. In step S5, an electric current is passed through the heater section 42, so that the first and second steam generation heaters 42A, 42B are turned on. In step S6, a temperature of the water level thermistor 102 is detected. In step S7, a temperature of the water temperature thermistor is detected. In step S8, whether or not water is present in the pot 41 is determined in the same manner as in the step S2, based on the detected temperature of the water level thermistor 102. As a result, if water is present, the processing goes to step S9, and if not, the processing goes on to step S16. In the step S9, whether or not a detected temperature of the water temperature thermistor is higher than 110°C is determined. As a result, if it is higher than 110°C, the processing goes on to the step S13, and if not, the processing goes on to step S10.

In the step S10, it is determined whether or not the detected temperature of the water-temperature thermistor is higher than 95°C and whether or not a water supply control execution flag TF indicating an execution of water supply control based on the detected temperature of the water temperature thermistor (0: not executed, 1: executed) is 1. As a result, if the detected temperature is higher than 95°C and TF=1, the processing goes on to step S11, and if not, the processing goes on to step S12. In the step S11, determining from the result of the determination in the step S10 that it is time to stop the water supply performed based on the detected temperature of the water temperature thermistor, 0 is set to the water supply control execution flag TF. In step S12, the pump 35 is stopped, and 0 is set to a pump operation flag PF (0: off, 1: on). Thereafter, the processing goes to step S17.

In step S13, determining from the result of the determination in the step S9 that the water level detection by the water level thermistor 102 is impossible, the water supply control is changed to that based on the detected temperature of the water-temperature thermistor. Then, it is determined whether or not the pump operation flag PF is 0 and whether or not the water supply control execution flag TF is 0. As a result, if PF=0 and TF=0, the processing goes on to step S14, and if not, the processing goes on to step S16. In the step S14, the water supply control execution flag TF is set to 1. In step S15, a water supply counter TK for counting a number of times of the water supply based on the detected temperature of the water temperature thermistor is incremented. In step S16, the pump 35 is driven, and 1 is set to the pump operation flag PF. In this manner, the water supply control based on the detected temperature of the water temperature thermistor is executed.

In step S17, it is determined whether or not the detected temperature of the water temperature thermistor is higher than 140°C. As a result, if it is determined that the detected temperature is higher than 140°C, it is decided that an abnormal state takes place, and the processing goes on to step S28, and if not, the processing goes on to step S18. In the step S18, it is determined whether or not a counted value of the water supply counter TK is 3 or more. As a result, if it is 3 or more, determining that scale cleaning is required, the processing goes on to step S19, and if not, the processing goes on to step S20. In the step S19, 1 is set to a cleaning request flag SF (0: no request, 1=there is a request) to request the user to perform cleaning for scale removal. In the step S20, it is determined whether or not heating treatment is completed. As a result, if it is completed, the processing goes on to step S21, and if not, returning to the step S6, the water level detection of the pot 41 and the determination about the cleaning request are repeated.

In the step S21, it is determined whether or not the cleaning request flag SF is 1. As a result, if it is 1, the processing goes on to step S24, and if not, the processing goes on to step S22. In the step S22, a cleaning request cancellation counter SC for counting a number of times of requesting cancellation of the cleaning request is decremented. In step S23, a counted value of the cleaning request cancellation counter SC is written on a non-volatile memory device. After that, returning to the step S1, water supply to the pot 41 is started.

In the step S24, since the result of the determination in the step S21 is that the cleaning request flag SF is 1, the cleaning request is notified to the user by, for example, displaying a message on a display section provided at the operation panel 11. In step S25, it is determined whether or not there is a cancellation request to the cleaning request from the user by operation of the operation panel 11, for example, and whether the counted value of the cleaning request cancellation counter is smaller than 5. As a result, if there is a cancellation request and SC<5, the processing goes on to step S26, and if not, the processing goes on to step S27. In the step S26, the cleaning request cancellation counter SC is incremented. Thereafter, the processing goes on to the step S23. In the step S27, a cleaning sequence for scale removal is executed. After that, returning to the step S1, water supply to the pot 41 is started.

In step S28, current application to the heater section 42 is stopped, so that the first and second steam generation heaters 42A, 42B are turned off. In step S29, the pump 35 is stopped so that water supply to the auxiliary tank 39 is stopped. In step S30, an error is indicated to the user by, for example, displaying a message on the display section provided at the operation panel 11. After that, the processing of water supply to the pot and scale cleaning determination is ended.

In the above processing, when it is determined that the cleaning request flag SF is 1 in the step S21, the cleaning request is notified to the user in the step S24. However, the present invention is not limited to this. For example, it is also possible to execute the determination of whether or not the counted value of the water supply counter TK is 3 or more after completion of heating, without using the cleaning request flag SF, and notify a cleaning request based on a signal indicating the result of the determination.

As described above, the steam cooker in the present embodiment has the water level sensor 43 for detecting the water level in the pot 41 of the steam generator 40 based on the water temperature and the temperature sensor 48 for detecting the water temperature in the pot 41. While the water level is being detected by the water level sensor 43, the water temperature in the pot 41 is monitored by the water temperature thermistor in the temperature sensor 48, and if the water temperature in the pot 41 exceeds 110°C, determining that the water level thermistor 102 of the water level sensor 43 is in an inoperative state in which the water level thermistor 102 cannot perform normal detection, the control unit drives the pump 35 to supply water. Therefore, even if it becomes impossible for the water level thermistor 102 to perform normal detection due to attachment of scales, water droplets and the like, it is possible to detect the absence of water in the pot 1 and perform water supply.

Also, in the present embodiment, when the number of times of the water supply based on the detected temperature of the water temperature thermistor exceeds three times, it is determined that scale has deposited on the water level thermistor 102 and a cleaning request is notified to the user. Therefore, even when normal detection by the water level thermistor 102 becomes impossible, it is possible to determine whether the detection impossibility or failure is attributable to the scale deposits or not and notify the user of the scale cleaning request at an appropriate right time. In this case, if the scale cleaning request is notified at the time when cooking is completed, loss of food due to interruption of heating halfway is avoided.

Further, in the above embodiment, even if the scale cleaning request is notified, "cancellation" by the user is accepted to make it possible to carry out successive heating, whereby the user's convenience is facilitated. In addition, when the number of times of the "cancellation" exceeds five times, the cleaning sequence is forcibly executed rejecting the "cancellation" by the user. Therefore, the safety of the equipment is prevented from being impaired.

Also, in the above embodiment, when the temperature detected by the water temperature thermistor exceeds 140°C, it is determined that the pot 41 is in a boil dry state, and the heater section 42 and the pump 35 are turned off. Therefore, the safety of the equipment can be secured. Furthermore, the counted value of the number of times of cancellation of the scale cleaning request is stored in the non-volatile memory device. Therefore, even if the power is turned off after completion of cooking in order to save the standby electricity, the above counted value is retained.

## Claims

1. A steam cooker, comprising:
a steam generator (40) for heating and evaporating water to generate steam;
a heating chamber (20) in which an object (90) to be cooked is heated by steam supplied from the steam generator (40), said steam generator (40), including:
a pot (41) to which water is supplied;
a heater section (42) placed in the pot (41);
a water level sensor (43) placed in vicinity of an upper side of the heater section (42) and comprising a self-heating type temperature sensing device for outputting a temperature signal that represents a detected temperature; and
a water temperature sensor (48) placed in vicinity of the upper side of the heater section (42) and outputting a temperature signal that represents a detected temperature;
a pump (35) for supplying water to the pot (41); and
a water supply control section for controlling the pump (35) to perform water supply to the pot (41) when a water temperature based on the temperature signal from the water temperature sensor (48) exceeds a second predetermined temperature higher than a first predetermined temperature that is a water temperature when a water level in the pot (41) is normally detected according to changes in water temperature based on the detected temperature of the self heating type temperature sensing device (43).

2. The steam cooker according to claim 1, wherein
the water supply control section controls the pump (35) to stop water supply to the pot (41) when the water temperature based on the temperature signal from the water temperature sensor (48) reaches a third predetermined temperature lower than the second predetermined temperature or reaches the second predetermined temperature.

3. The steam cooker according to claim 1, wherein
the water supply control section controls the pump (35) to stop water supply to the pot (41) when a lapse time from start of the water supply reaches a predetermined time that is longer than a water supply time in performing water supply based on a water level detected by the water level sensor (43).

4. The steam cooker according to claim 1, comprising:
a heater turn-off section for stopping power supply to the heater section (42) when the water temperature based on the temperature signal from the water temperature sensor (48) exceeds a fourth predetermined temperature higher than the second predetermined temperature.

5. The steam cooker according to claim 1, comprising:
a water supply counting section for counting a number of times of water supply to the pot (41) by the water supply control section; and
a scale deposition determining section for determining that scale has deposited on the water level sensor (43) when a counted value of the number of times of the water supply satisfies a predetermined condition.

6. The steam cooker according to claim 5, wherein
the scale deposition determining section uses, as said predetermined condition, a condition that water supply to the pot (41) by the water supply control section is successively performed a first predetermined number of times or more.

7. The steam cooker according to claim 5, wherein
the scale deposition determining section uses, as said predetermined condition, a condition that water supply to the pot (41) by the water supply control section is performed a second predetermined number of times or more within a predetermined time.

8. The steam cooker according to claim 5, comprising:
a cleaning request signal output section for outputting a cleaning request signal for requesting cleaning of the inside of the pot (41) and the water level sensor (43) when the scale deposition determining section has determined that scale has deposited on the water level sensor (43).

9. The steam cooker according to claim 8, comprising:
a cleaning request notifying section for, after completion of heating of the object (90) to be cooked, notifying a user of a cleaning request based on the cleaning request signal outputted from the cleaning request outputting section.

10. The steam cooker according to claim 9, comprising:
a cancellation request rejecting section for, when there is a cancellation request from a user in response to the notification of the cleaning request by the cleaning request notifying section, determining whether or not a predetermined condition for rejecting the cancellation request is satisfied, and rejecting the cancellation request when the predetermined condition is satisfied.

11. The steam cooker according to claim 10, wherein the cancellation request rejecting section uses, as said predetermined condition, a condition that water supply to the pot (41) by the water supply control section is successively performed a third predetermined number of times or more, said third predetermined number of time being larger than the first predetermined number of times used for determining the deposition of scale.

12. The steam cooker according to claim 10, wherein the cancellation request rejecting section uses, as said predetermined condition, a condition that water supply to the pot (41) by the water supply control section is performed a fourth predetermined number of times, said fourth predetermined number of time being larger than the second predetermined number of times used for determining the deposition of scale.

13. The steam cooker according to claim 10, comprising:
a cancellation counting section for counting a number of times of cancellation of the cleaning request, wherein the cancellation request rejecting section uses, as said predetermined condition, a condition that a counted value of the number of times of cancellation represents a fifth predetermined number of times or more.

14. The steam cooker according to claim 13, wherein said cancellation counting section decrements or resets the counted value when no water supply to the pot (41) by the water supply control section has been performed in a cooking carried out after cancellation of the cleaning request.

15. The steam cooker according to claim 13, comprising a cleaning request cancellation count storing section for storing a counted value of the cancellation counting section in a non-volatile storing device.
